# EUROPEAN PATENT APPLICATION

(11) **EP 4 851 078 A2**
(43) Date of publication of application: **09.12.2026**
(21) Application number: 26177924.3
(22) Date of filing: 11.05.2026
(51) Int. Cl.: B65G 47/84, B65G 43/00

(54) **ENHANCED SYSTEMS AND METHODS FOR AUTOMATED SORTATION CONVEYOR OPERATION**

(30) Priority: 09.05.2025 US 202519203404
(71) Applicant: Aegis Sortation LLC, Louisville, Kentucky 40223 (US)
(72) Inventor: ICE, Kenneth Jay, Louisville, Kentucky, 40223 (US); TERRELL, Dean, Louisville, Kentucky, 40223 (US)
(74) Representative: dompatent

(57) **Abstract**

Systems and methods are provided for identifying and controlling slats and shoes of a conveyor. An conveyor system includes an electronic reader reading an identification (ID) corresponding to each of a plurality of slats traversing an end of the conveyor. One or more slats on which a package is disposed are identified, and another electronic reader identifies the one or more slats as they approach a conveyor output. Based on the identification, one or more shoes corresponding to the one or more slats are diverted, thereby directing the package to the conveyor output. The one or more slats on which the package is disposed may be identified by imaging the package traversing the end of the conveyor and determining a correspondence between identification of the package and the IDs.

## Description

### CROSS-REFERENCE TO RELATED APPLICATIONS

This application is a continuation-in-part of U.S. Patent Application No. 18/814,223, filed August 23, 2024, which is a continuation application of U.S. Patent Application No. 18/214,617, filed June 27, 2023 issued as U.S. Patent No. 12,071,308, which is a continuation of U.S. Patent Application No. 16/645,332, filed March 6, 2020 issued as U.S. Patent No. 11,702,293, which is a National Stage entry under 35 U.S.C. § 371 of international Application PCT/US2018/066877, filed December 20, 2018, which is a continuation application of PCT/US18/050025 filed September 7, 2018, which claims priority to prior U.S. Provisional Patent Application No. 62/555,061, filed September 7, 2017, the entire disclosures of which are incorporated herein by reference.

### BACKGROUND

### 1. Field

Example embodiments described herein relate to the field of conveyors and conveyor operation, and more particularly sortation conveyor systems including sliding shoe sorters. One or more example embodiments may provide a system and method allowing missing shoe and/or missing pin detection, identification and/or correction during conveyor operation, and improved speed and accuracy in identification of the positions of slats on the sorter deck and thus improved and faster identification of shoes to divert to drive packages to designated outputs.

### 2. Background

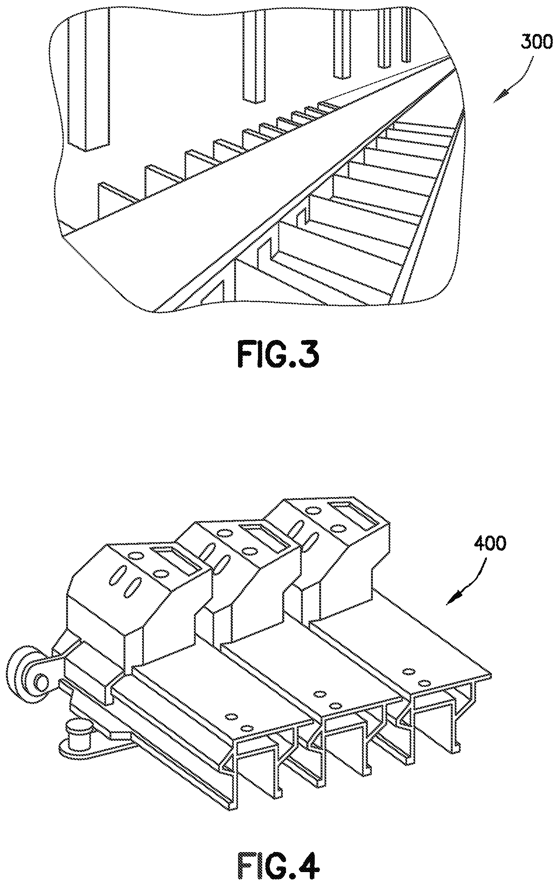

During operation of sliding shoe sorters deployed in related-art conveyor systems (such as those including a conveyor 300 generally illustrated in FIG. 3), conveyor shoes (such as shoes 400 generally illustrated in FIG. 4), may become dislodged from the conveyor and timely detection of such an occurrence can be challenging, resulting in mishandling of packages, and in some cases breakdowns, halting operation for significant amount of time.

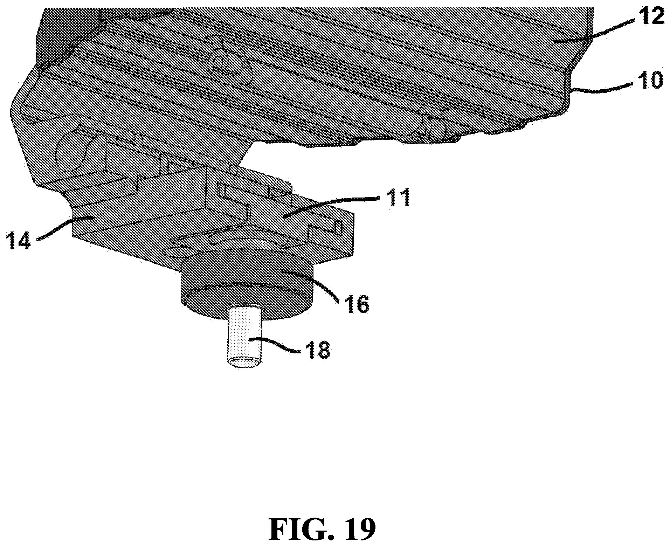

Additionally, shoe sorters deployed in related-art conveyor systems have a pin and roller arrangement, as generally illustrated in FIG. 19, where bottom of shoe 10 comprises a housing 12 mounted to slat 14 with pin components including roller 16 and pin 18 connected to slat 14 via a mounting bracket 11. During operation, pin components may become dislodged from the show resulting in a missing pin failure and timely detection of the missing pin occurrence is yet another challenge in the field of conveyors and conveyor operation.

A shoe sorter itself is a sorting machine on which packages are conveyed on a sorter deck comprised of slats, such as slat 14 of FIG. 19, for example. Ends of each slat are connected, respectively, to a pair of sorter chains running along opposite sides of a frame, and the sorter chains are driven by a drive motor. Each slat is fitted with a shoe, such as shoe 10 of FIG. 19, for example, which is guided across the sorter deck to divert packages disposed on the sorter deck. In order to accurately divert each package to the desired output, precise position tracking of both the packages and the corresponding shoes is desired. As sorter performance has increased, in some cases to speeds of up to 700 feet per minute or 140 inches per second, the position of a package should be tracked within a small margin of error over the length of the sorter, and the control system should be able to activate and deactivate diversion of a shoe in a short span of time.

Over time and use, the sorter chains "stretch" as the chains age. By way of example, a shoe sorter with a 750 foot (ft.) length may have a 1.25 inch (in.) chain link pitch and may include 7,200 chain links along a top of the sorter deck. Based on only 0.001 in. of clearance per chain link, a chain stretch of 7.2 in. over the top of the sorter deck may occur over time, resulting in a possible 7.2 in. position error. Furthermore, rolling friction produces an "accordion" effect, whereby the chain stretch is not linear over the length of the top of the sorter deck, but rather causes the chain to extend and compress over the length of the sorter deck based on the dynamic load on the sorter deck. A solution is needed to address these issues with accurate identification of the positions of the slats of the sorter deck.

### SUMMARY

Example embodiments may address at least the above such drawbacks and/or disadvantages and other disadvantages not described above. Also example embodiments are not required to overcome the disadvantages described above, and may not overcome any of the problems described above.

According to an aspect of an example embodiment, an automated sortation method comprises: running a conveyor of an automated sortation system, the conveyor comprising a deck comprising a plurality of slats, a plurality of shoes each disposed on one of the plurality of slats; and while running the conveyor: reading a unique identification (ID) of each of the plurality of slats traversing an end of the conveyor; identifying a package, disposed on the deck, traversing the end of the conveyor; identifying one or more slats, of the plurality of slats, on which the package is disposed based on a correspondence between the ID and the package; determining a correspondence between the one or more slats and a conveyor output which is a destination of the package; reading the ID of each of the plurality of slats approaching the conveyor output; controlling a divert switch to divert one or more shoes, corresponding to the one or more slats, thereby pushing the package to the conveyor output.

In an example implementation of system or methodology according to example embodiments, reading the unique ID may comprise, for each of the plurality of slats, a first radio frequency reader, disposed at the end of the conveyor, receiving the unique ID from a radio frequency transceiver attached to one of the slat and a shoe corresponding to the slat; and the reading the ID corresponding to each of the plurality of slats approaching the conveyor output may comprise, for each of the plurality of slats, a second radio frequency reader, disposed at an approach to the conveyor output, receiving the ID from the radio frequency transceiver attached to the one of the slat and the shoe corresponding to the slat.

In another example implementation of system or methodology according to example embodiments, reading the unique ID may comprise, for each of the plurality of slats, a first electronic reader, disposed at the end of the conveyor, receiving reading the unique ID from one of a barcode and a quick response (QR) code attached to one of the slat and a shoe corresponding to the slat; and the reading the ID corresponding to each of the plurality of slats approaching the conveyor output may comprise, for each of the plurality of slats, a second electronic reader, disposed at an approach to the conveyor output, reading the ID from the one of the barcode and the QR code attached to the one of the slat and the shoe corresponding to the slat.

In another example implementation of system or methodology according to example embodiments, reading the unique ID may comprise, for each of the plurality of slats, a receiver disposed at the end of the conveyor, receiving a signal comprising the unique ID from a transmitter attached to one of the slat and a shoe corresponding to the slat; and the reading the ID corresponding to of each of the plurality of slats approaching the conveyor output may comprise, for each of the plurality of slats, a second receiver, disposed at an approach to the conveyor output, receiving the signal comprising the ID from the transmitter attached to the one of the slat and the shoe corresponding to the slat.

In another example implementation of system or methodology according to example embodiments, each of the first receiver disposed at the end of the conveyor and the second receiver disposed at the approach to the conveyor output may be one of a Bluetooth device, a Bluetooth Low Energy (BLE) device, and a Near-Field Communication (NFC) device; and the transmitter attached to the one of the slat and the shoe corresponding to the slat may be one of a Bluetooth device, a BLE device, and an NFC tag.

In another example implementation of system or methodology according to example embodiments, each cycle of the conveyor around a conveyor frame may comprise a full cycle, and the method may further comprise: while running the conveyor: reading the unique ID corresponding to each of the plurality of slats by receiving, at a read station, the unique ID from a transmitter attached to a shoe corresponding to the slat, and based on the receiving, determining that the shoe corresponding to the slat has completed a full cycle of the conveyor, after a predetermined number of full cycles, the read station recording as missing any shoe corresponding to a slat not recorded as having completed a full cycle, and the read station transmitting, to at least one external device, information regarding any shoe corresponding to the slat not recorded as having completed a full cycle.

In another example implementation of system or methodology according to example embodiments, the method may further comprise: identifying a location of a missing shoe by running the conveyor around the conveyor frame until the read station reads a unique ID corresponding to one of a sequential number immediately before a sequential number of the ID of the slat not recorded as having completed the full cycle and a sequential number immediately after the sequential number of the ID of the slat not recorded as having completed the full cycle.

According to an aspect of another example embodiment, an automated sortation method comprises: running a conveyor of an automated sortation system, the conveyor comprising a deck comprising a plurality of slats, a plurality of shoes each disposed on one of the plurality of slats; and while running the conveyor: a first radio frequency reader receiving a radio frequency signal comprising a unique identification (ID) of each of the plurality of slats traversing an end of the conveyor; an optical sensor imaging a package, disposed on the deck, traversing the end of the conveyor; programmable logic controller receiving first signal from the first radio frequency reader, the first signal comprising the ID of each of the plurality of slats, receiving a second signal from the optical sensor, the second signal comprising an identification of the package, and identifying one or more slats, of the plurality of slats, on which the package is disposed based on the first signal and the second signal; a second radio frequency reader receiving the radio frequency signal comprising the ID of each of the plurality of slats approaching a conveyor output; a microcontroller receiving a third signal from the second radio frequency reader, the third signal comprising the ID of each of the plurality of slats, receiving a fourth signal from the programmable logic controller, the fourth signal comprising the IDs of the one or more slats on which the package is disposed; and the microcontroller controlling a divert switch to divert one or more shoes, corresponding to the one or more slats on which the package is disposed, thereby pushing the package to the conveyor output.

In another example implementation of system or methodology according to example embodiments, the first radio frequency reader receiving the radio frequency signal may comprise, for each of the plurality of slats, receiving the signal comprising the unique ID from a transmitter attached to one of the slat and a shoe corresponding to the slat; and the second radio frequency reader receiving the radio frequency signal may comprise, for each of the plurality of slats, receiving the signal comprising the ID from the transmitter attached to the one of the slat and the shoe corresponding to the slat.

In another example implementation of system or methodology according to example embodiments, each cycle of the conveyor around a conveyor frame may comprise a full cycle, and the method may further comprise: while running the conveyor: the first radio frequency reader receiving the radio frequency signal from a transmitter attached to a shoe corresponding to the slat, and based on the receiving, determining that the shoe corresponding to the slat has completed a full cycle of the conveyor, after a predetermined number of full cycles, the first radio frequency reader recording as missing any shoe corresponding to a slat not recorded as having completed a full cycle, and the read station transmitting, to at least one external device, information regarding any shoe corresponding to the slat not recorded as having completed a full cycle.

The method may further comprise: identifying a location of a missing shoe by running the conveyor around the conveyor frame until the first radio frequency reader receives the radio frequency signal comprising an ID corresponding to one of a sequential number immediately before a sequential number of the ID corresponding to the slat not recorded as having completed the full cycle and a sequential number immediately after the sequential number of the ID corresponding to the slat not recorded as having completed the full cycle.

According to an aspect of another example embodiment, an automated sortation system comprises: a conveyor comprising a deck comprising at least one slat/shoe combination comprising a slat, a shoe disposed on the slat, and a radio frequency transceiver secured to one of the slat and the shoe; an optical sensor identifying a package, disposed on the slat of the at least one slat/shoe combination, as the package traverses the head end of the conveyor; a first read station, disposed at the head end of the conveyor, configured to establish communication with the radio frequency transceiver and thereby receive, as the slat traverses the head end of the conveyor, a radio frequency signal comprising a unique identification (ID) of the slat; a second read station, disposed at an approach to a conveyor output, configured to establish communication with the radio frequency transceiver and thereby receive, as the slat approaches the conveyor output, the radio frequency signal comprising the ID of the slat; a divert switch configured to divert the shoe of the at least one slat/shoe combination and thereby push the package, disposed on the slat of the at least one slat/shoe combination, to the conveyor output; a controller comprising a memory and at least one processor configured to execute instructions stored in the memory and thereby control the divert switch to divert the shoe based on a signal from the optical sensor, a signal from the first read station, and a signal from the second read station.

### BRIEF DESCRIPTION OF THE DRAWINGS

The above and other objects, advantages, and salient features will become apparent to those skilled in the art from the following detailed description of example embodiments when taken in conjunction with the accompanying drawings in which:
FIG. 1 illustrates a conveyor shoe according to one or more example embodiments ;
FIG. 2 illustrates another view of a conveyor shoe according to one or more example embodiments;
FIG. 3 illustrates a related-art conveyor.
FIG. 4 illustrates a related-art conveyor shoes.
FIG. 5 is a diagrammatic illustration of a system according to one or more example embodiments;
FIG. 6 is another diagrammatic illustration of a system according to one or more example embodiments;
FIG. 7 is a diagrammatic illustration of an operation of a system according to one or more example embodiments;
FIGs. 8-11 are diagrammatic illustrations of a method of using a system configuration according to one or more example embodiments;
FIG. 12 is a diagrammatic illustration of another operation of a system according to one or more example embodiments;
FIG. 13 is a diagrammatic illustration of an operation of a system according to one or more example embodiments;
FIG. 14 is another diagrammatic illustration of a system according to one or more example embodiments;
FIG. 15 is a diagrammatic illustration of an operation including software and hardware components of a system according to one or more example embodiments;
FIG. 16 illustrates another a conveyor shoe according to one or more example embodiments;
FIG. 17 is a diagrammatic illustration of a configuration of hardware components of a system according to one or more example embodiments;
FIG. 18 is a diagrammatic illustration of another a configuration of hardware components of a system according to one or more example embodiments;
FIG. 19 illustrates a conveyor shoe including a related-art pin component;
FIG. 20 illustrates a conveyor shoe including a pin component according to one or more example embodiments;
FIG. 21 illustrates another view of a conveyor shoe including a pin component according to one or more example embodiments;
FIG. 22 is a diagram of a sortation system and adjacent elements according to an example embodiment;
FIG. 23 is a perspective view of a portion of a sorter conveyor according to an example embodiment;
FIG. 24 is a schematic drawing of a section of one of the chains of the conveyor of FIG. 23, according to an example embodiment;
FIG. 25 is an explanatory diagram of a sortation system according to an example embodiment; and
FIG. 26 is a flow chart illustrating an example divert method for a sortation system according to one or more example embodiments described herein.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including", "comprise, and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these example embodiments pertain may not be described here in detail.

An example embodiment employing "smart shoe" technology provides at least one shoe including a radio frequency identification (RFID) tag allowing the at least one shoe to be uniquely identified by a reader, which can be an RFID reader capable of communicating with the RFID tag.

Another example embodiment employing "missing pin detection" technology provides at least one shoe including pin component with an RFID tag allowing the pin component to be uniquely identified by a reader, which can be an RFID reader capable of communicating with the RFID tag.

Yet another example embodiment employing "smart shoe" technology and "missing pin detection" technology provides at least one shoe including a pin component with an RFID tag disposed with respect to the shoe housing and another RFID tag disposed with respect to the pin component, allowing the at least one shoe and/or the pin component to be uniquely identified by a reader, which can be an RFID reader capable of communicating, or selectively communicating, with at least one of the RFID tags.

A further example embodiment employing "smart shoe" technology and/or "missing pin detection" technology provides a conveyor system including a plurality of, or all, shoes each including an RFID tag disposed with respect to the shoe housing and/or another RFID tag disposed with respect to the pin component, allowing each of the shoes and/or pin components to be uniquely identified and monitored by at least one reader deployed by the conveyor system to provide real time and/or historical data indicative of the operation of each shoe, pin component, and/or the conveyor system.

A yet further example embodiment employing "smart shoe" technology and/or "missing pin detection" technology provides a conveyor system including a plurality of, or all, shoes each including an RFID tag disposed with respect to the shoe housing and/or another RFID tag disposed with respect to the pin component, allowing each of the shoes and/or pin components to be uniquely identified by at least one reader deployed by the conveyor system, whereby operation of the conveyor system can be controlled by a user, or autonomously controlled, based on real time and/or historical data indicative of the operation of each shoe, pin component, and/or the conveyor system provided by the reader(s).

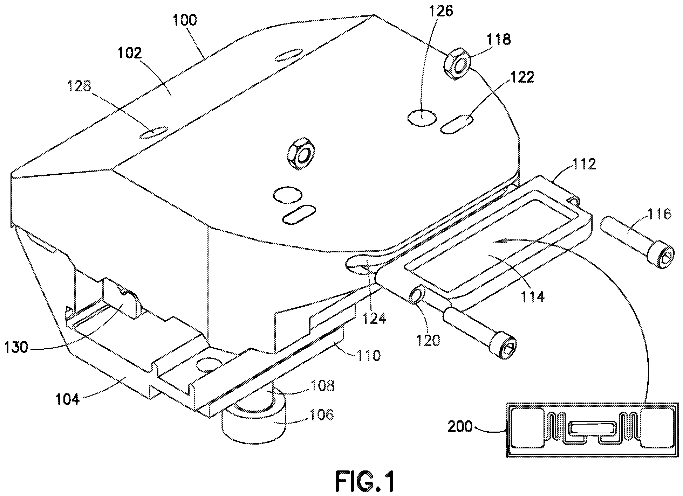

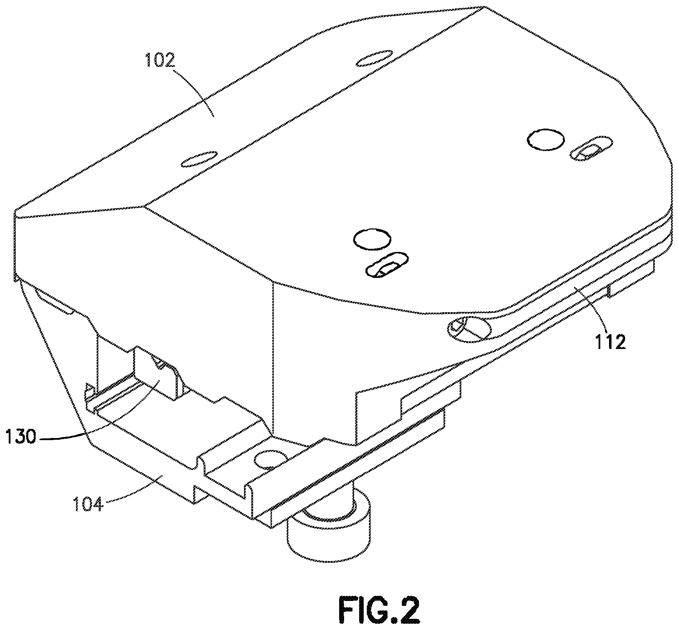

In non-limiting example embodiments, diagrammatically shown in FIGs. 1 and 2, a smart shoe 100 disposed on a sliding assembly 130 comprises a housing 102 including an RFID tag 200 therein. As illustrated, housing 102 can include a slot or compartment 124 for accommodating a tray 112 for an RFID tag 200 such that, once RFID tag 200 is placed in the tray 112, the tray 112 can be secured in the slot or compartment 124, for example by means of one or more screws 116 and nuts 118 attaching one or more portions 120 of tray 112 to housing 102. In a yet further example implementation, housing 102 includes one or more mounting areas, such as holes 126, 128, for mounting housing 102 to slat 104. Pin components 106, 108 are connected to slat 104 via a mounting bracket 110.

While a detailed example implementation is described with reference to FIGs. 1 and 2, any means of attaching or incorporating an RFID tag in or on a shoe of a conveyor system may be used.

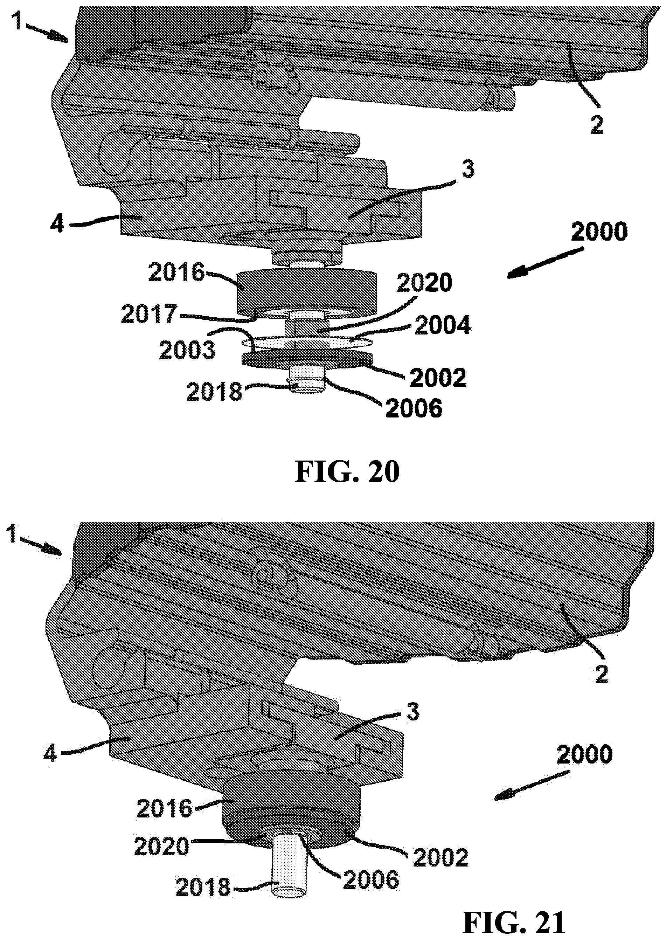

In another non-limiting example embodiment, diagrammatically shown in FIGs. 20 and 21, a related-art shoe, or a smart shoe 100 comprising a housing 102 including an RFID tag 200 therein, comprises a pin component 2000 associated with shoe 1, for example where housing 2 of shoe 1 is mounted to slat 4 and pin component 2000 is connected to slat 4 via a mounting bracket 3 . As illustrated, component 2000 includes roller 2016 rotatably disposed on pin 2018, and further includes a cover, or hubcap, 2002 for accommodating an RFID tag 2004 such that, once RFID tag 2004 is placed in or on cover 2002, the cover 2002 can be removably or permanently fixed with respect to roller 2016 such that RFID tag 2004 is secured within the cover 2002 and between inner surface 2003 of cover 2002 and outer surface 2017 of roller 2016 as illustrated in FIG. 21. An interface 2020 can also be provided to rotationally fix cover 2002 either with respect to pin 2018 or with respect to roller 2016, such that the roller 2016 can rotate either with respect to interface 2020 fixed to pin 2018, or with interface 2020 with respect to pin 2018.

In an example implementation, the cover 2002 can be removably or permanently fixed to roller 2016, for example by means of one or more pressure bands 2006 configured with respect to pin 2018. In another example implementation, pin 2018 can include at least a partial thread such that a band/or nut 2006 having internal threading can secure cover 2006 with respect to roller 2016. In yet another example implementation, band 2006 can be snap fit to a portion of pin 2018 to secure cover 2006 with respect to roller 2016. In a further example implementation, cover 2006 can be secured with respect to roller 2016 by means of interface 2020, with or without the use of band 2006.

In yet further example implementation, illustrated in FIG. 20, element 2004 can be an intermediate cover or a sealing element placed over an RFID tag (not shown) which is disposed within the cover, or hubcap, 2002. In still further example implementation, cover 2002, interface 2020, element 2004 with RFID tag (not shown within cover 2002 under element 2004) can be assembled as a unit mounted on pin 2018 with respect to roller 2016, as illustrated in FIG. 21. For example, such an assembled unit can be rotationally fixed or not fixed to pin 2018 and/or roller 2016, with or without the use of band 2006, as long as roller 2016 can rotate with respect to pin 2018.

While a detailed implementation is described with reference to FIGs. 20 and 21, any means of attaching or incorporating an RFID tag in or on a pin component of a shoe of a conveyor system may be used.

Another example embodiment provides a conveyor system including one or more shoes, for example all shoes, having an RFID tag associated therewith, for example as described above with reference to FIGs. 1 and 2, and/or an RFID tag associated with a pin component thereof, for example as described above with reference to FIGs. 20 and 21, and at least one RFID tag reader. According to an example implementation, a conveyor system comprises a shoe management system allowing customer interactions directly with the reader where, for example, interface between this application and the reader can be implemented via a socket interface. In a further example implementation, an OPC (open platform communications) wrapper can be created around the interface so that a HMI (Human Machine Interface) could interact directly with the shoe management system.

An example embodiment provides a system and method for monitoring a conveyor operation deploying shoes with RFID tags, configured for example as described with reference to FIGs. 1 and 2, facilitating accurate detection and identification of a missing shoe such as when a shoe comes off of the conveyor using communication between shoe's RFID tag and at least one RFID reader strategically deployed with respect to the conveyor and/or the shoes, and communication between the at least one reader and a system, such as a portable computer, a hand-held communication device, a server, and Internet-based solution, etc., providing a user interface, and/or a programmable logic controller (PLC). In an example implementation, communication to the PLC can be supported using any one or more available protocols, such as Ethernet Industrial Protocol (EIP) and/or Transmission Control Protocol/Internet Protocol (TCP/IP) adaptable to the hardware of RFID reader.

An example embodiment provides a system and method for monitoring a conveyor operation deploying shoes with RFID tags, configured as described above with reference to FIGs. 20 and 21, facilitating accurate detection and identification of a missing pin and/or shoe with a missing and/or malfunctioning pin using communication between pin component's RFID tag and at least one RFID reader strategically deployed with respect to the conveyor and/or the shoes, and communication between the at least one reader and a system, such as a portable computer, a hand-held communication device, a server, and Internet-based solution, etc., providing a user interface, and/or a programmable logic controller (PLC). In an example implementation, communication to the PLC can be supported using any one or more available protocols, such as Ethernet Industrial Protocol (EIP) and/or Transmission Control Protocol/Internet Protocol (TCP/IP) adaptable to the hardware of RFID reader

In an example implementation, system and method according to example embodiments provide various modes of operation for a conveyor system implementing smart shoe technology and/or missing pin detection technology including without limitation: commissioning and setup mode where at least one reader is determining what RFID tag(s) are in any one or more of the respective shoes and/or pin components; operational mode where a sorter conveyor is running at and operational speed and at least one reader is actively monitoring the status of one or more of RFID tag carrying shoes and /or pin components on the sorter; maintenance mode where a PLC can request to be notified when a particular shoe and/or pin component is at the reader and the reader can respond by sending a shoe status and/or pin component status notification such that the PLC can properly present the shoe and/or pin component in a maintenance area; and/or broken shoe presentation mode where an identified broken shoe can be present to a maintenance area by a sorter; and/or a missing pin component presentation mode.

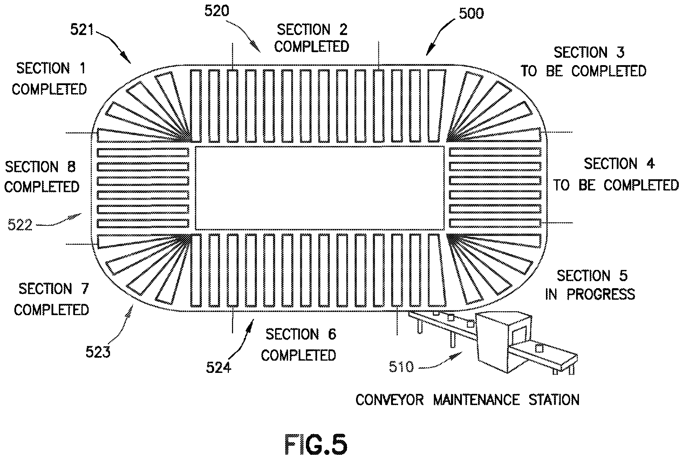

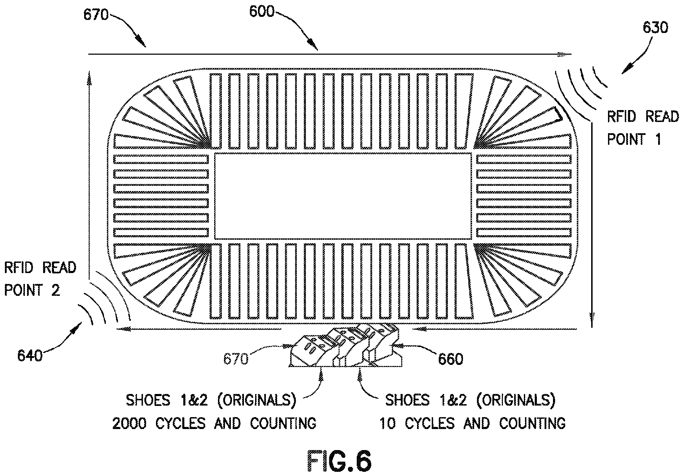

Various example operation modes provided by a system deploying "smart shoe" technology and/or "missing pin detection" technology are described as follows with reference to FIGs. 5-18, where monitoring and deployment of RFID components described with respect to examples of "smart shoe" technology are equally applicable to monitoring and deployment of RFID components of "missing pin detection" technology so that such analogous description (i.e., where a "missing pin" can be analogized to RFID deployment and processing of a "missing shoe") is omitted.

Referring to FIGs. 5-7, according to example implementations, a missing-shoe detection system with an added RFID component optionally can be deployed on an existing conveyor product line to provide, without limitation and in any combination:
Missing Shoe Detection and Correction: During conveyor operation, automatically identifying missing 'sort shoes' on the conveyor 500, and sending a message, for example to a conveyor maintenance station 510, to set the conveyer to "missing-shoe maintenance" mode. From missing-shoe maintenance mode, a series of corrective operations may be followed by the operator to replace that shoe.
Sectional-Identification during 'Non-Shoe Related' Conveyor Maintenance Cycles: Using the RFID tags on the sort-shoes, such as those described above with reference to FIGs. 1 and 2, to identify "already completed" sections 520, 521, 522, 523, 524 of the conveyor 500 during traditional (non-shoe related) conveyor maintenance cycles.
Cycle-Count Record Keeping of Sort-Shoes: For preventative maintenance purposes, the system can keep track of the number of times shoes 650, 660 rotate around the conveyor 600. As individual shoes get replaced during the "missing shoe detection and correction" process those shoes will be decommissioned by the system, while the new (replacement) shoes will be introduced and will begin their own cycle-count records.

According to an example embodiment, if the missing shoe identification and replacement feature is not desired, cycle-count read capability only can be implemented using one RFID read point, which translates to 1 reader x 2 antennas.

RFID-System Commissioning and RFID Setup Procedure: Every newly-deployed conveyor 600 can be fitted with sort-shoes that have RFID tags, for example shoe 660 including any combinations of features described above with reference to FIGs. 1 and 2 fitted with a tag 702. When the conveyor-system is initially turned on and/or is put into commissioning or setup mode the RFID reader 630 and/or 640 at one of two designated read points can begin programming these RFID tags one at a time. Once all of the tags have moved through the encoding cycle 670, the RFID-component of the conveyor system can be deemed "ready for use".

Example implementations:
∘ The RFID system can encode these tags 702 in numeric-sequential order, and know when the encoding cycle is complete upon reading the first tag it programmed at the onset of this process.
∘ If, during the RFID-tag encoding process a tag is missed (not programmed), this will be detected by the system during an ensuing conveyor-run cycle, and the system will prompt the operator to run the encoding cycle again.
∘ As each shoe-tag is encoded during the setup cycle 770, that tag's RFID EPC number will be logged into a database 700. From that point forward, that shoe will be individually identified by that EPC number.

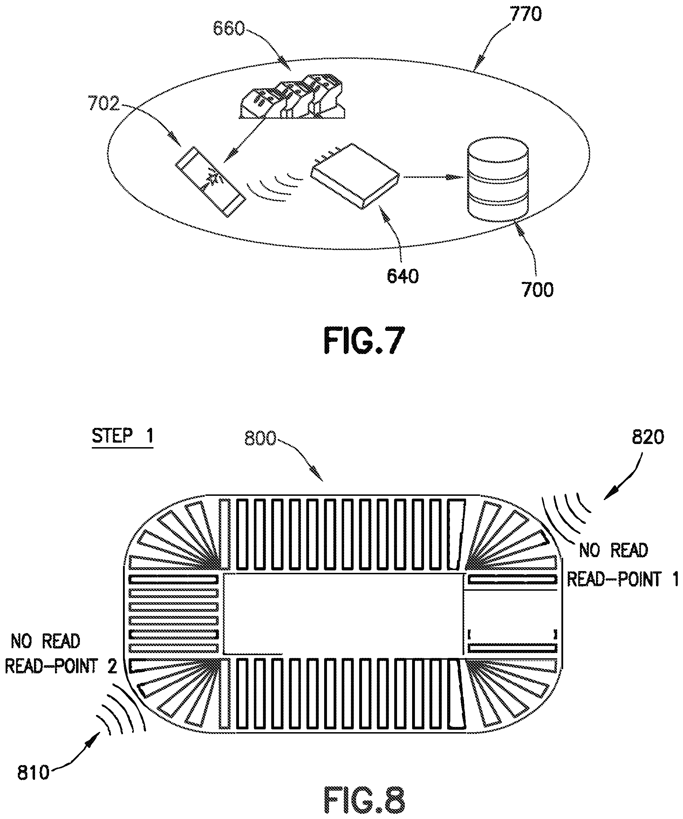

Referring to FIGs. 8-13, example implementations may provide or in combination with other features, a Missing Shoe Detection and Cycle Counts as follows. As the conveyor 800 runs, every shoe's RFID tag is recorded as having completed one full cycle each time it passes by the RFID read point. If a particular tag does not pass by the RFID read-point after a given number of cycle runs (i.e., the "number of runs" it takes to determine that a shoe is missing can be set on a situational basis), that tag (i.e., that shoe) is deemed by the system as being missing. Consequently, the system sends an alert and goes into "missing shoe" recovery mode. During Missing Shoe Recovery Mode, the operator can by-pass or accept the alert, and upon accepting the alert the conveyor automatically slows down to 1/5 speed (i.e., down to 120 fpm from 600 fpm) allowing the operator to then search for the missing shoe.

As the operator searches for the missing shoe from atop the conveyors' maintenance station/platform, he puts the conveyor into "jog" mode. The operator has the benefit of knowing precisely where the 'missing-shoe bearing' is on the conveyor and when it will arrive at the maintenance station, as during the RFID setup process all of the RFID tags were sequentially numbered.

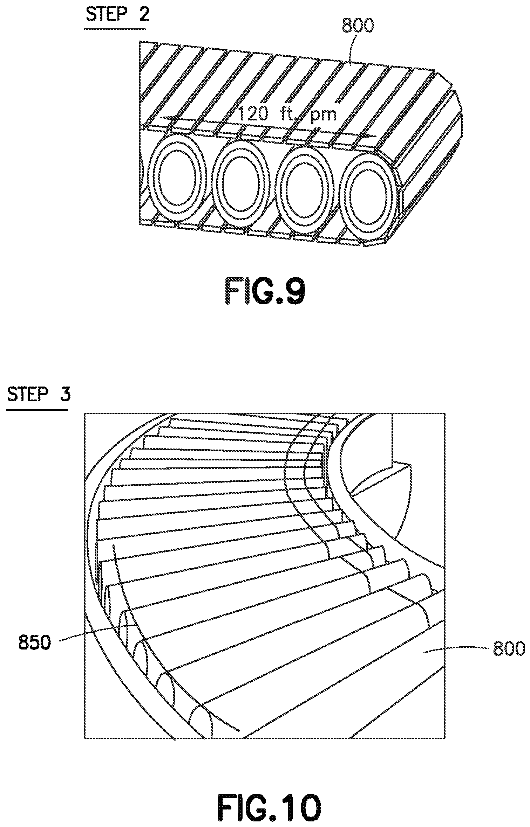

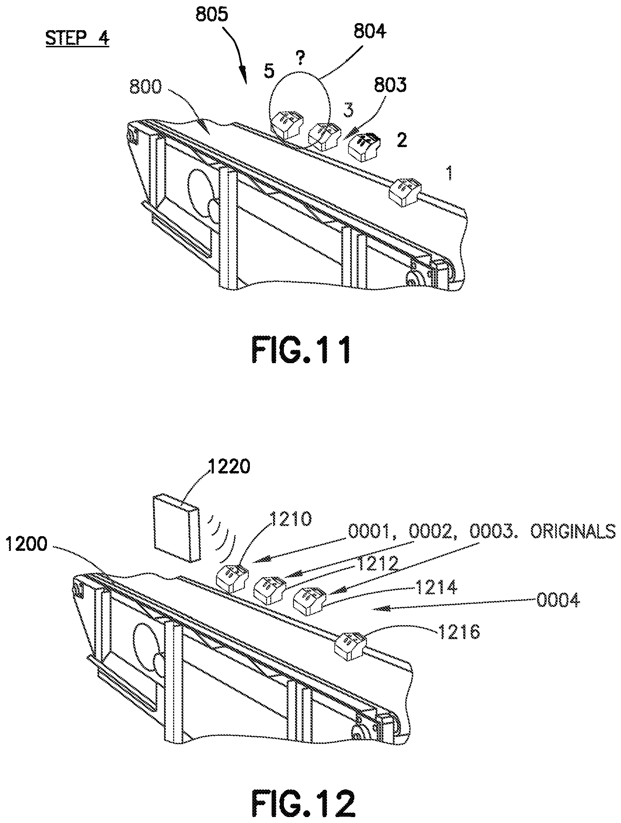

An example implementation can be described with reference to FIGs. 8-11 as follows:
- 1 (FIG. 8): Bearing with missing shoe passes by two read-points 810 and 820, and system deems that shoe as missing.
- 2 (FIG. 9): Upon operator accepting alert, conveyor slows down, for example to 1/5 speed (120 ft. per minute).
- 3 (FIG. 10): Upon honing in on "missing shoe bearing" area 850, the operator puts conveyor into "jog" mode to isolate that bearing.
- 4 (FIG. 11): Operator finds missing-shoe bearing by honing in on RFID tags 805 and 803 that were directly in front of the missing shoe 804.

Referring to FIG. 12, an example implementation of Replacement-Tag Encoding includes: after a missing shoe gets physically replaced on the conveyor, it is critical that the RFID tag of replacement shoes 1216 is encoded, for example via reader/encoder 1220 in such a way that that particular shoe is identified by the system in the correct physical sequence. Associated operations are as follows:
a. Shoe 1216 is physically placed on bearing of conveyor 1200
b. Operator puts system into tag re-encoding mode and conveyor begins cycling in search of 'newly replaced' RFID tag. The system knows which tag to re- encode by scanning and identifying the tags of shoes such as 1210, 1212, 1214 directly in front of it on the conveyor 1200. The system also knows what EPC number to encode the replacement-tag with, so that the replacement-tag is always recognized by the system in the correct sequence (for jogging, etc.).
c. Replacement-tag is encoded, with the same EPC number as the original tag it replaced - plus one bit-change at the end of the EPC that identifies that tag as being associated to a "replacement" shoe.

The entre process above can be circumvented at any point in time through a manual-override option on the conveyor console, so that the decision of when to replace the missing shoe can be made by the operator.

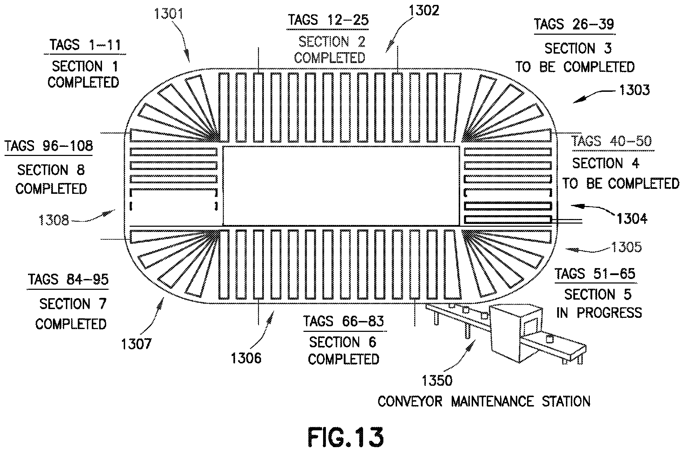

Referring to FIG. 13, an example embodiment may provide a Non-Shoe Related 'Conveyor Maintenance Mode' where for example conveyor 1300 is sectionalized, with each section 1301, 1302, 1302, 1304, 1306, 1307, 1308 being identified by those RFID tags that reside within it. During a non-RFID related, incremental conveyor maintenance cycle, the operator (conveyor maintenance station 1350) has the ability to jog the conveyor by individual sections, service those sections, and consequently identify/categorize those sections within the system as either having been completed (for example, section 1301, 1302, 1306, 1307, 1308) for service, in progress (for example, section 1305), or still needing to be serviced (for example, sections 1303 and 1304).

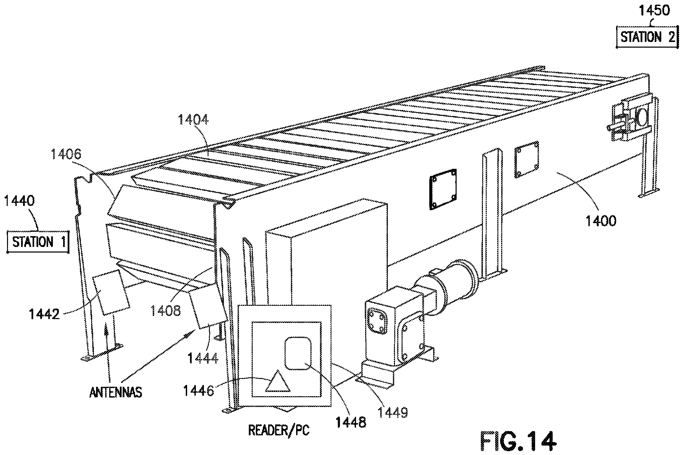

Referring to FIG. 14, example implementations provide hardware including, without limitation and in any combination: two RFID read stations 1440, 1450, one at each end of the sortation conveyor 1400. Any station or all stations, such as stations 1440, 1450 can comprise a reader 1446 and for example two antennas 1442, 1443, covering the left 1406 and right 1408 of the belt 1404 in order to capture shoes that can be either left or right justified. The readers can be inside, for example a NEMA 1 rated, enclosure 1449, and the antennas can be mounted directly underneath the belt 1404. In an example implementation, both stations 1440, 1450 can read tags, but only "Station 1" 1440 can be configured to handle the encoding processes. For example, a PC 1448 can be installed within enclosure 1449 of station 1440, but can connect and communicate with readers in both stations 1440, 1450.

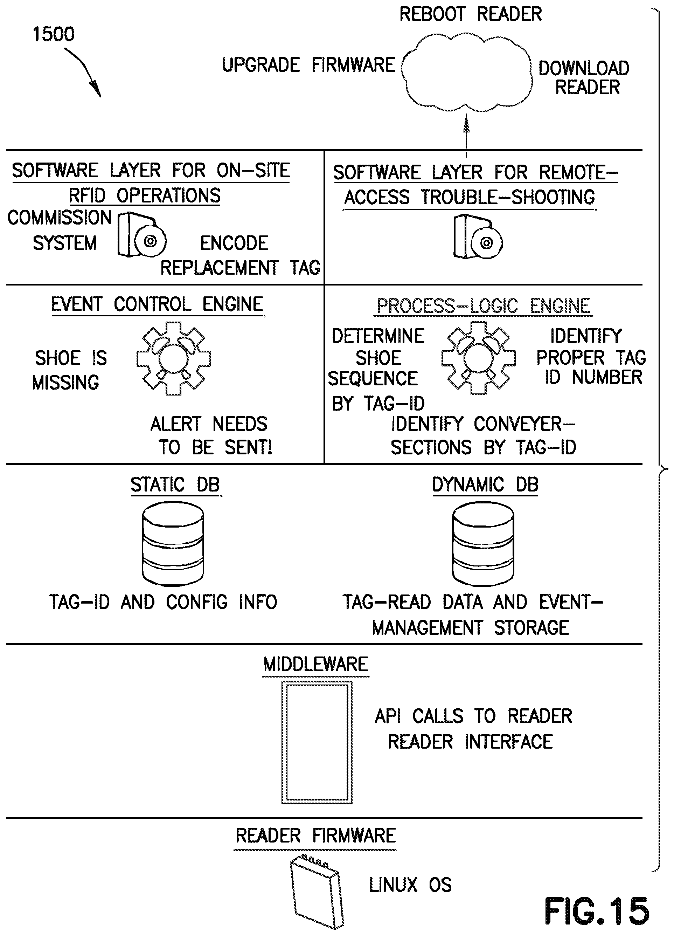

Referring to
FIG.15, which diagrammatically illustrates an RFID software stack 1500 according to an example implementation, where an example of RFID Software Requirements include the following:

### Example Functional User-Interface (UI) Elements

a. UI for putting conveyor into commissioning mode
b. UIs for alert-notification for when conveyor goes into "missing shoe identification and recovery" mode
c. UI for switching conveyor from "missing shoe and recovery" mode to "replacement-tag programming" mode
d. UI for switching conveyor from "replacement-tag programming" mode to "regular operation" mode
e. UI layer for RFID-system remote-access troubleshooting
   i. Reader 'On Line" verification
   ii. Reader Reboot
   iii. Reader Settings pushout (manual operation)
   iv. Antenna-Port verification
   v. Firmware Upgrade capability
   vi. Settings Check (Selected Settings)
f. UI layer for RFID-system on-site operations
   i. See items a through d above

### 2) Example Infrastructure and Engine-Logic Elements:

g. Static Database to store system-setup and configuration information (Tag identification association, etc.)
h. Dynamic Database for tag-read recording
i. System Setup Engine - To sequentially encode tags, log those tags into the static database, and maintain the knowledge of how (in which order) those tags are physically lined up on the conveyor
j. 'Missing Tag' Recovery Mode - Logic to conclude that a tag (shoe) is missing from having passed through two read points without being detected, to automatically put the conveyor into slowdown mode (1/5 speed) as a result of a tag being deemed as missing, and finally, to send alerts
k. Reprogramming/Tag-Replacement Mode - Logic to identify which tag needs to be programmed (by identifying the tag in front of it, and/or by recognizing the EPC as having an E200 prefix), logic to automatically program the replacement tag with the same EPC as its' predecessor tag - but with one added bit at the end for "replacement v. original" tag identification
l. Cycle Counts - The ability to count the number of times a shoe-tag travels through the conveyor checkpoints
m. Logic for conveyor-section identification through tag-ID association
n. Software Layer for remote-access troubleshooting (refer to bullet-point "e" in "functional user-interface requirements" section, above)
o. Software Layer for on-site system operations (see bullet-points a through d in "functional user-interface requirements" section, above)

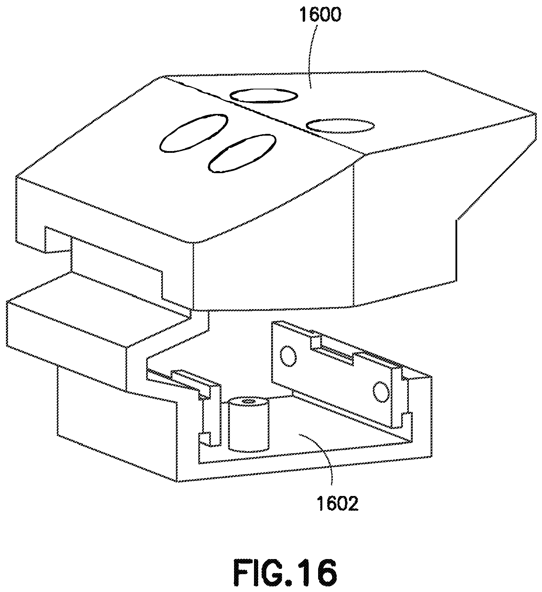

Example embodiments of RFID Tag Selection, Tag Placement and Tag Encoding are described as follows:
Tag Selection: Any RFID tag can be implemented according to the disclosure. For example, a tag selected for this application can be a related-art RFID tag such as ALN-9830 manufactured by Alien Technology LLC . This tag measuring 70mm x 9.5mm can fit within the molded shoe. The shape and orientation of the inlay can facilitate rapid, close proximity reading. However, other RFID design may also be used based on desired implementation and testing.
Tag Placement: as described in the examples of FIGs. 1 and 2 above, and further illustrated in FIG. 16, a tag can be inserted into the shoe 1600 during the injection molding process. It can be oriented such that the tag is parallel to the conveyor slat 1602.
Tag Encoding: As the RFID system can be encoded using a full 96bit EPC bank in any manner. In an example implementation, one of the bits can be used to identify that a shoe is a replacement shoe, in order for the system to know to start a new count of cycles for that shoe.

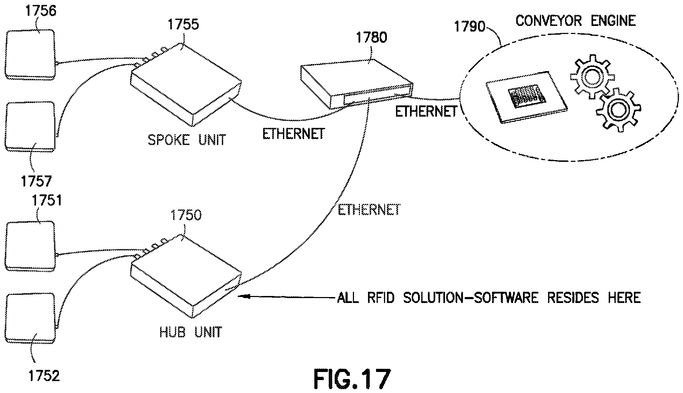

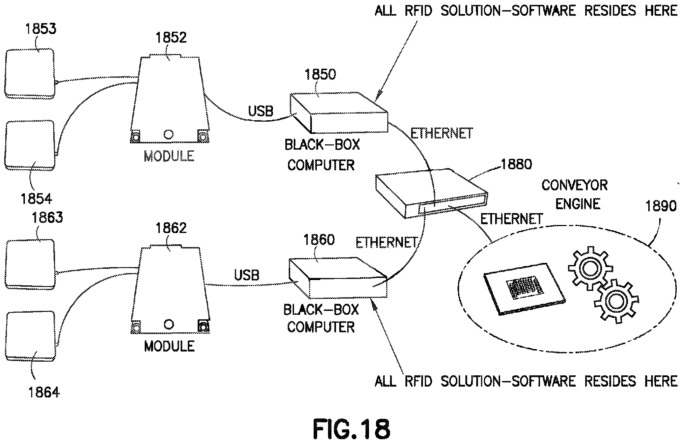

Referring to the examples of FIGs. 17 and 18, hardware design options implementing embodiments using various hardware components, such as those manufactured by Alien Technology LLC.

An example of a fixed reader configuration is illustrated in FIG. 17 where an all RFID Solution-Software can reside in a hub unit 1750 and include:
- Reader Firmware
- Middleware
- Databases (static and dynamic)
- Event-Control Engine
- Process-Logic Engine
- Software-Layer for all local RFID operation
- Software-Layer for all remote-access troubleshooting
- User Interfaces

In an example implementation (see also FIG. 14) hub unit 1750 and spoke unit 1755 can include an RFID reader and be connected to respective antennas 1751, 1752 and 1756, 1757. Hub unit 1750 and spoke unit 1755 can be interconnected via an Ethernet component 1780 with conveyor engine 1790.

An example of a module configuration is illustrated in FIG. 18 where an all RFID Solution-Software can reside in one or more connected computing devices 1850, 1860 including a microprocessor and a non-transitory computer-readable storage medium including storage of computer-executable instructions, and can include:
- Reader Firmware
- Middleware
- Databases (static and dynamic)
- Event-Control Engine
- Process-Logic Engine
- Software-Layer for all local RFID operation
- Software-Layer for all remote-access troubleshooting
- User Interfaces

In an example implementation (see also FIGs. 14 and 17) computing devices 1850 can be connected in a wired or wireless configuration with respective modules 1852, 1862 that can include an RFID reader and be connected to respective antennas 1853, 1854 and 1863, 1864. Modules 1852, 1862 can be interconnected via an Ethernet component 1880 with conveyor engine 1990.

A further example implementations of the embodiment provide for reader data collection where a user device in communication with the reader, or the reader itself can store, for example in a file format, a list of all the valid RFIDs values for the sorter, such that upon startup, the file can be read, and for example if a file is not found or cannot be read, an error will be reported. In yet further example implementation, every command received by the PLC can be stored, for example in a file/folder format by date, such that for example on a rolling basis, a particular period (e.g., 1 month) or records can be store and made available. In still further example implementation items recorded can include without limitation any of:
- Power On Events
- Command Events
- Record the detection of missing shoes
- Maintenance Mode usage
and/or shoe data can include for each shoe (for example at a minimum):
- Number of revolutions since each particular shoe was 'read' by the scanner
- Time Stamp for the last time a shoe was 'read'.

According to further example implementations of the embodiment the following non-limiting interface examples include:

### PLC to Reader

| INT[X] | Definition |
|---|---|
| 1 | Heartbeat. Value incrementing every second will increment from 1 to 1000 |
| 2 | Speed of Sorter in FPM. |
| 3 | Command |
| | 1=Present Shoe |
| | 2=Setup Mode |
| | 3=Broken Shoe |
| | 4=Regular Run |
| | 5=Request Data |
| 4 | Shoe Number to Present/Request Data |
| 5 | Number Of Shoes On Sorter |

### Reader to PLC

| INT[X] | Definition |
|---|---|
| 1 | Heartbeat. Value incrementing every second will increment from 1 to 1000 |
| 2 | Last Shoe Read |
| 3 | Status: |
| | 1=Presenting Shoe |
| | 2=In Setup Mode |
| | 3=Broken Shoe Detected |
| | 4=In Regular Run |
| | 5=Requested Data |
| 4 | ID of First Broken Shoes |
| 5 | Number Of Broken Shoes |
| 6 | Request Shoe |
| 7 | Requested Shoe OK |
| 8 | Requested Shoe Read Counts |
| 9 | Last Seen |
| | 1=Right Side |
| | 2=Left Side |
| 10 | Last Seen |
| | 1=induct |
| | 2=discharge |

Shoe Sorter Tracking: One or more example embodiments may provide improved speed and accuracy in identification of the positions of slats on the sorter deck and thus improved and faster identification of shoes to divert to drive packages to designated outputs.

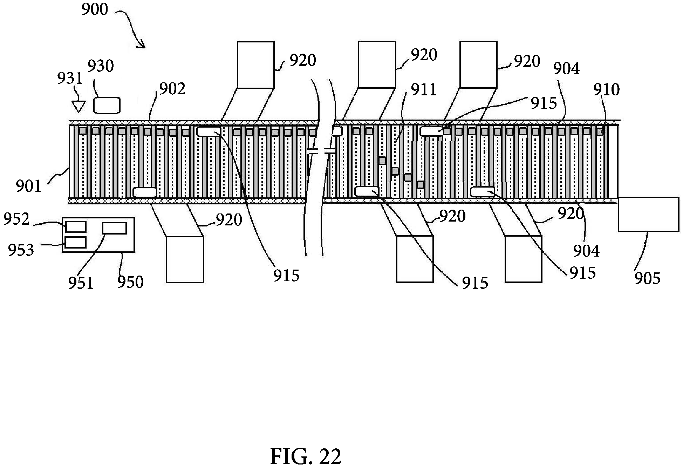

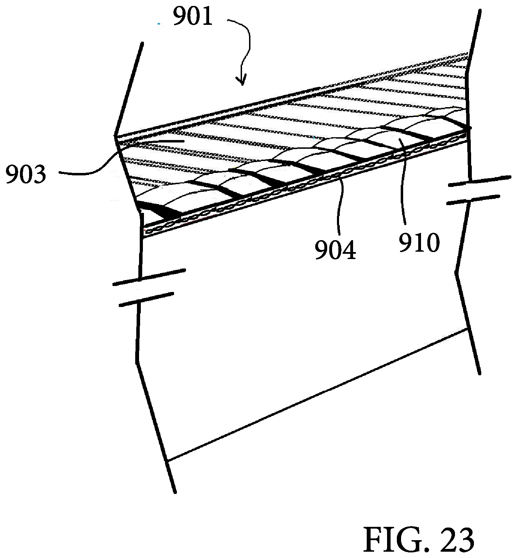

FIG. 22 is a diagram of a sortation system 900 and adjacent elements according to an example embodiment. FIG. 23 is a perspective view of a portion of a sorter conveyor 901 according to an example embodiment. The sorter conveyor includes a frame supporting the deck 902 comprised of slats 903, and a pair of chains 904 (only one illustrated). The slats 903 may be comprised of extruded aluminum, for example. The slats may be implemented as any of the slats as described hereinabove. Each end of each slat 903 is connected to one of the chains 904. The chains 904 are driven by a drive motor 905 which may be disposed at the head end or the discharge end of the sorter conveyor 901. Each slat 903 is fitted with a shoe 910, which may be implemented as any of the shoes as described hereinabove. A shoe 910 is designed to slide across the corresponding slat 903 on which it is mounted, and each shoe 910 includes a guide wheel and a pin, as described hereinabove. The shoe wheel is guided by a network of rails 911 disposed below the deck 902, and the sorting of packages disposed on the deck 902 is accomplished by directing corresponding shoes 910 across the deck 902 displacing one or more packages to a designated output 920. The diverting of the shoes 910 is accomplished by activating a divert switch 915 which acts against the divert pin on the bottom of a shoe 910, diverting the shoe 910 onto a lateral guide rail 911. When the guide wheel engages with the lateral rail 911, the forward motion of the deck 902 will move the shoe 910 across the deck 902, thereby displacing a package on the deck 902.

In order to divert a package to the correct output 920, there should be precise position tracking of both the package and the corresponding one or more shoes 910, as they move along the length of the sorter conveyor 901. The position of the deck may be tracked using an electronic pulse encoder 930. The encoder 930 may be implemented as any encoder as would be understood by one of skill in the art, and it may be mounted to idler sprockets of the chains 904. Alternately, the encoder may be mounted on a bearing of the conveyor as discussed above with respect to FIG. 12. The encoder pulses are output to a controller 950. In order to associate a package with the one or more slats 903 on which it sits, an "induct photo eye" 931 may be positioned at the head end of the conveyor 901. The "photo eye" may be implemented, for example, as a digital imaging device in cooperation with one or more processors executing image recognition software. Data output from the "photo eye" is received by the controller 950. The controller 950 may be implemented as an integrated circuit (IC), a system on chip (SoC) or a printed circuit board (PCB), for example, a motherboard, and may include for example, a memory and an application processor which operates according to software recorded in the memory. As the leading and trailing edges of a package are detected by the "photo eye" 931, a count is initiated, which is indexed by the encoder pulses. Based on the correspondence between the position of the "photo eye" and the encoder pulses, the controller 950, for example as described above, can identify the one or more slats 903 on which the package sits. When the leading edge of the package arrives at the divert switch 961 corresponding to a desired output 920, the switch 961 is activated by the controller 950, sending the one or more shoes 910 mounted on the one or more slats 903 across the slats 903 and thereby displacing the package to the output 920.

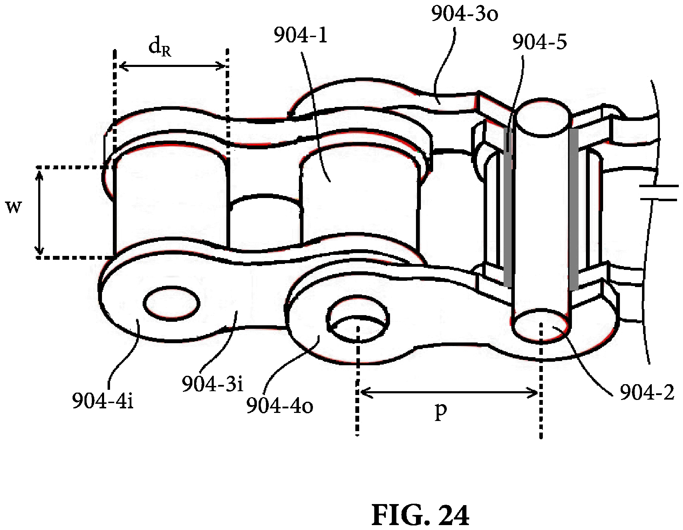

FIG. 24 is a schematic drawing of a section of one of the chains 904 according to an example embodiment. The chain 904 is comprised of a series of rollers attached via connecting links and pins. Each roller 904-1 is substantially shaped as a hollow cylinder and has a pin 904-2 extending therethrough in the axial direction. At each end of the roller 904-1, the pin 904-2 is connected to an inner link 904-3i. Each inner link 904-3i comprises two inner plates 904-4i connected together. At each end of the roller 904-1, the pin 904-2 passes through an opening in one of the inner plates 904-4i of an inner link 904-3i. At the end of an adjacent roller 904-1 in a first direction, a pin 904-2 passes through an opening in the other inner plate 904-4i of the inner link 904-3i. After passing through the inner link 904-3i, the pin 904-2 is connected to an outer link 904-3o. Each outer link 904-3o comprises two outer plates 904-4o connected together. The pin 904-2 passes through an opening in one of the outer plates 904-4o of an outer link 904-3o. At the end of an adjacent roller 904-1 in a second direction, a pin 904-2, having passed through an opening in a different inner link, passes through an opening in the other outer plate 904-4o of the outer link 904-3o. In this manner, a series of the rollers 904-4 are connected together in a chain. A bushing 904-5 may be disposed within each roller 904-4 between an inner circumference of the roller 904-4 and an outer circumference of the pin 904-2. As illustrated in FIG. 24, a diameter of the roller 904-4 is shown as "d_{R};" an internal width of the chain is shown as "w," and a pitch, measured between the axes of adjacent pins, is shown as "p."

With greater speeds, accurate identification of the location of the slats becomes more important, particularly when dealing with potential issues related to the stretching of the chains. According to an example embodiment, each slat or corresponding shoe is uniquely identified at a head end of the conveyor 901, a package disposed on the conveyor deck 902 is associated with the unique ID of the one or more slats 903 on which it sits. Each slat or corresponding shoe is then also uniquely identified at each divert switch 961. A microcontroller 962 can be located at each divert switch 961 and can be configured via hardware or software programming to control activation of the corresponding divert switch 961. In operation, the controller 950 can output a control signal to one of the microcontrollers 962 indicating the unique identities of a particular one or more slats 903 (e.g. slats #237 through #245) (or one or more shoes), which have been identified as being associated with a particular package. The control signal may indicate that the identified one or more slats (or one or more shoes), should be diverted. The microcontroller 962 receiving the control signal may then monitor each slat or corresponding shoe at the corresponding divert switch, and can activate its corresponding divert switch 961 when a first one of the one or more slats/shoes is identified. According to this example system and method, it is not necessary to track positions of the slats and packages along the length of the conveyor, thus enabling the use of longer conveyor.

Unique identification of each slat or corresponding shoe may be accomplished via an RFID tag which may be attached to each of the slats 903. Alternately, an RFID tag may be attached to each of the corresponding shoes 910, or to fewer than all of the slats 903 or corresponding shoes 910, for example to every other slat 903, or every other shoe 910. Using RFID tags, a unique identity can be created for each tagged slat 903, and according to this example embodiment, an RFID tag reader 963 can be located at each divert switch 961. Each reader 963 can identify the tagged slats 903 as they pass each divert switch 961. The microcontroller 962 co-located at each divert switch 961 and can be configured via hardware or software programming to communicate with the RFID reader 963 and control activation of the corresponding divert switch 961. In operation, the controller 950 can output the control signal to a microcontroller 962 to instruct diversion of one or more slats 903/shoes 910. The microcontroller 962 receiving the control signal may then monitor communications from its corresponding RFID reader 963 and can activate its corresponding divert switch 961 accordingly.

According to an alternative, unique identification of each slat or corresponding shoe may be accomplished via a barcode attached to the slats 903 or corresponding shoes 910 in a position enabling imaging or scanning of the barcode via readers disposed at the head end of the conveyor and at each diverter switch. Analogously, a quick response (QR) code may be attached to the slats 903 or corresponding shoes 910. According to one or more further alternatives, Bluetooth or Bluetooth Low Energy (BLE), Near-Field Communication (NFC) may be used to uniquely identify each slat or corresponding shoe via the use of Bluetooth-enabled devices attached to the slats or corresponding shoes and corresponding Bluetooth "readers," NFC tags and corresponding NFC devices, as would be understood by one of skill in the art. Thus, the RFID tags described herein may be exchanged with barcodes, QR codes, Bluetooth or BLE devices, or NFC tags; and the RFID readers described herein may be exchanged with barcode readers, QR code readers, Bluetooth or BLE devices, or NFC devices, as would be understood by one of skill in the art.

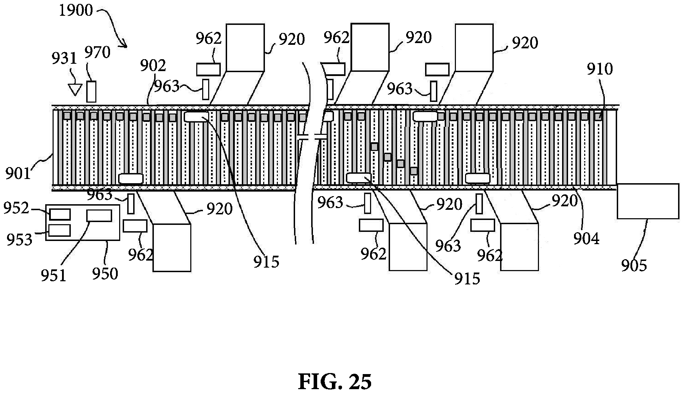

FIG. 25 is an explanatory diagram of a sortation system 1900 according to an example embodiment. The system 1900 includes a conveyor 901; a controller 950 including a PLC 951, a memory 952, and a communication unit 953; an induct photo eye (PE) 931 and a head end RFID reader 970 disposed at a head end of the conveyor 901; and outputs 920 and corresponding divert switches 961, RFID readers 963, and microcontrollers 962. The slats 903 of the conveyor 901 are each fitted with a shoe 910 and an RFID tag (not illustrated). The RFID tag may be attached in either a fixed or removable manner to either the slat 903 or the corresponding shoe 910. If attached to the shoe 910, the RFID tag can be attached to any element of the shoe in any manner as discussed with respect to any of the example embodiments described above. As would be understood by one of skill in the art, a pulse encoder could be used in place of the head end RFID reader 970. Each of the microcontrollers 962 may include a communication unit (not shown) corresponding to the communication unit 953 of the controller 950. Accordingly, the controller 950 and the microcontrollers 962 may communicate via electrical or optical wires or wirelessly. Likewise, the RFID readers 963 and 970 and the PE 931 may transmit signals to the controller 950 and the microcontrollers 962 via electrical or optical wires or wirelessly.

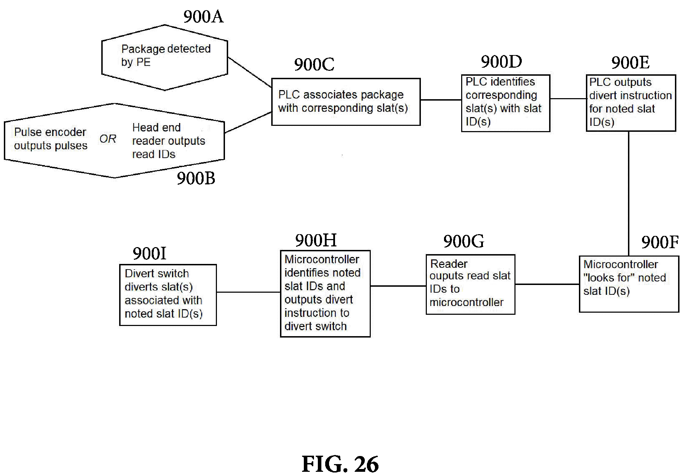

It is to be understood that correspondence information, associating each slat with a unique ID, based on the RFID tag associated therewith, may be previously determined and stored in the memory 952 of the controller 950. The determination of the correspondence information may be according to the example embodiments discussed above with respect to FIGs. 14-18. FIG. 26 is a flow chart illustrating an example divert method for a sortation system according to one or more example embodiments described herein. For example, the flow chart of FIG. 26 may be used in accordance with sortation system 1900 of FIG. 25. A package enters the head end of the conveyor 901 and is detected by the PE 931 which transmits information of the detected package to the PLC (900A). A head end reader, for example RFID reader 970, outputs IDs of slats 903 as they traverse the head end of the conveyor 901 (900B). Alternately, a pulse encoder outputs pulses corresponding to the slats as they traverse the head end of the conveyor 901 (900B). The PLC 951 receives the outputs from the PE 931 and the head end reader or pulse encoder and associates the detected package with one or more corresponding slats 903 (900C). Based on correspondence information stored in memory 952, the PLC 951 identifies slat IDs for the corresponding slats (900D). Based on the detected package, the PLC 951 outputs a divert instruction to a microcontroller 962, the instruction including the noted slat IDs for the slats associated with the detected package (900E). The microcontroller 962 receives the divert instruction and "looks for" the noted slat IDs (900F). The reader associated with the output 920 with which the microcontroller 962 is also associated, for example RFID reader 963, outputs read slat IDs to the microcontroller 962 (900G). The microcontroller 962 identifies the noted slat IDs and outputs a divert instruction activating the corresponding divert switch 961 (900H). The divert switch 961 is activated and diverts the shoes associated with the noted slat IDs, thus diverting the package to the desired output 920 (900I).

The methods and operations described above with respect to example embodiments can be implemented, at least in part, in digital electronic circuitry, analog electronic circuitry, or in computer hardware, firmware, software, or a combination thereof. These components can be implemented, for example, as a computer program product such as a computer program, program code or computer instructions tangibly embodied in an information carrier, or in a machine-readable storage device, for execution by, or to control the operation of, data processing apparatus such as a programmable processor, a computer, or multiple computers.

A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or other device or on multiple device at one site or distributed across multiple sites and interconnected by a communication network. Also, functional programs, codes, and code segments for accomplishing features described herein can be easily developed by programmers skilled in the art. Method steps associated with the example embodiments can be performed by one or more programmable processors executing a computer program, code or instructions to perform functions (e.g., by operating on input data and/or generating an output). Method steps can also be performed by, and apparatuses described herein can be implemented as, special purpose logic circuitry, e.g., a field programmable gate array (FPGA) or an application-specific integrated circuit (ASIC), for example.

A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example, semiconductor memory devices, e.g., electrically programmable read-only memory (ROM) (EPROM), electrically erasable programmable ROM (EEPROM), flash memory devices, and data storage disks (e.g., magnetic disks, internal hard disks, or removable disks, magneto-optical disks, and CD-ROM and DVD-ROM disks). The processor and the memory can be supplemented by, or incorporated in special purpose logic circuitry.

Computer-readable non-transitory media includes all types of computer readable media, including magnetic storage media, optical storage media, flash media and solid state storage media. It should be understood that software can be installed in and sold with a central processing unit (CPU) device. Alternately, the software can be obtained and loaded into the CPU device, including obtaining the software through physical medium or distribution system, including, for example, from a server owned by the software creator or from a server not owned but used by the software creator. The software can be stored on a server for distribution over the Internet, for example.

It should be understood by those of skill in the art that various communication protocols can be deployed with various RFID tag and RFID reader hardware, and/or various visual and/or audio user interfaces can be implemented to facilitate processing and/or displaying information and/or controlling hardware and/or software components of the system.

It may be understood that example embodiments described herein may be considered in a descriptive sense only and not for purposes of limitation. Descriptions of features or aspects within each example embodiment may be considered as available for other similar features or aspects in other example embodiments.

While example embodiments have been and described with reference to the figures, it will be understood by those skilled in the art that various changes in form and details may be made therein without departing from the spirit and scope as defined by the following claims.

## Claims

1. An automated sortation method comprising:
running a conveyor of an automated sortation system, the conveyor comprising a deck comprising a plurality of slats, a plurality of shoes each disposed on one of the plurality of slats; and
while running the conveyor:
reading a unique identification (ID) corresponding to each of the plurality of slats traversing an end of the conveyor;
identifying a package, disposed on the deck, traversing the end of the conveyor;
identifying one or more slats, of the plurality of slats, on which the package is disposed based on a correspondence between the ID and the package;
determining a correspondence between the one or more slats and a conveyor output which is a destination of the package;
reading the ID corresponding to each of the plurality of slats approaching the conveyor output;
controlling a divert switch to divert one or more shoes, corresponding to the one or more slats, thereby pushing the package to the conveyor output.

2. The method according to claim 1, wherein:
the reading the unique ID comprises, for each of the plurality of slats, a first radio frequency reader, disposed at the end of the conveyor, receiving the unique ID from a radio frequency transceiver attached to one of the slat and a shoe corresponding to the slat; and
the reading the ID corresponding to each of the plurality of slats approaching the conveyor output comprises, for each of the plurality of slats, a second radio frequency reader, disposed at an approach to the conveyor output, receiving the ID from the radio frequency transceiver attached to the one of the slat and the shoe corresponding to the slat.

3. The method according to claim 1, wherein:
the reading the unique ID comprises, for each of the plurality of slats, a first electronic reader, disposed at the end of the conveyor, receiving reading the unique ID from one of a barcode and a quick response (QR) code attached to one of the slat and a shoe corresponding to the slat; and
the reading the ID corresponding to each of the plurality of slats approaching the conveyor output comprises, for each of the plurality of slats, a second electronic reader, disposed at an approach to the conveyor output, reading the ID from the one of the barcode and the QR code attached to the one of the slat and the shoe corresponding to the slat.

4. The method according to claim 1, wherein:
the reading the unique ID comprises, for each of the plurality of slats, a receiver disposed at the end of the conveyor, receiving a signal comprising the unique ID from a transmitter attached to one of the slat and a shoe corresponding to the slat; and
the reading the ID corresponding to of each of the plurality of slats approaching the conveyor output comprises, for each of the plurality of slats, a second receiver, disposed at an approach to the conveyor output, receiving the signal comprising the ID from the transmitter attached to the one of the slat and the shoe corresponding to the slat.

5. The method according to claim 4, wherein each of the first receiver disposed at the end of the conveyor and the second receiver disposed at the approach to the conveyor output is one of a Bluetooth device, a Bluetooth Low Energy (BLE) device, and a Near-Field Communication (NFC) device; and the transmitter attached to the one of the slat and the shoe corresponding to the slat comprises one of a Bluetooth device, a BLE device, and an NFC tag.

6. The method according to claim 1, wherein each cycle of the conveyor around a conveyor frame comprises a full cycle, the method further comprising:
while running the conveyor:
reading the unique ID corresponding to each of the plurality of slats by receiving, at a read station, the unique ID from a transmitter attached to a shoe corresponding to the slat, and based on the receiving, determining that the shoe corresponding to the slat has completed a full cycle of the conveyor,
after a predetermined number of full cycles, the read station recording as missing any shoe corresponding to a slat not recorded as having completed a full cycle, and
the read station transmitting, to at least one external device, information regarding any shoe corresponding to the slat not recorded as having completed a full cycle.

7. The method according to claim 6, further comprising:
identifying a location of a missing shoe by running the conveyor around the conveyor frame until the read station reads a unique ID corresponding to one of a sequential number immediately before a sequential number of the ID of the slat not recorded as having completed the full cycle and a sequential number immediately after the sequential number of the ID of the slat not recorded as having completed the full cycle.

8. An automated sortation method comprising:
running a conveyor of an automated sortation system, the conveyor comprising a deck comprising a plurality of slats, a plurality of shoes each disposed on one of the plurality of slats; and
while running the conveyor:
a first radio frequency reader receiving a radio frequency signal comprising a unique identification (ID) of each of the plurality of slats traversing an end of the conveyor;
an optical sensor imaging a package, disposed on the deck, traversing the end of the conveyor;
programmable logic controller receiving first signal from the first radio frequency reader, the first signal comprising the ID of each of the plurality of slats, receiving a second signal from the optical sensor, the second signal comprising an identification of the package, and identifying one or more slats, of the plurality of slats, on which the package is disposed based on the first signal and the second signal;
a second radio frequency reader receiving the radio frequency signal comprising the ID of each of the plurality of slats approaching a conveyor output;
a microcontroller receiving a third signal from the second radio frequency reader, the third signal comprising the ID of each of the plurality of slats, receiving a fourth signal from the programmable logic controller, the fourth signal comprising the IDs of the one or more slats on which the package is disposed; and
the microcontroller controlling a divert switch to divert one or more shoes, corresponding to the one or more slats on which the package is disposed, thereby pushing the package to the conveyor output.

9. The method according to claim 8, wherein:
the first radio frequency reader receiving the radio frequency signal comprises, for each of the plurality of slats, receiving the signal comprising the ID from a transmitter attached to one of the slat and a shoe corresponding to the slat; and
the second radio frequency reader receiving the radio frequency signal comprises, for each of the plurality of slats, receiving the signal comprising the ID from the transmitter attached to the one of the slat and the shoe corresponding to the slat.

10. The method according to claim 8, wherein each cycle of the conveyor around a conveyor frame comprises a full cycle, the method further comprising:
while running the conveyor:
the first radio frequency reader receiving the radio frequency signal from a transmitter attached to a shoe corresponding to the slat, and based on the receiving, determining that the shoe corresponding to the slat has completed a full cycle of the conveyor,
after a predetermined number of full cycles, the first radio frequency reader recording as missing any shoe corresponding to a slat not recorded as having completed a full cycle, and
the read station transmitting, to at least one external device, information regarding any shoe corresponding to the slat not recorded as having completed a full cycle.

11. The method according to claim 10, further comprising:
identifying a location of a missing shoe by running the conveyor around the conveyor frame until the first radio frequency reader receives the radio frequency signal comprising an ID corresponding to one of a sequential number immediately before a sequential number of the ID corresponding to the slat not recorded as having completed the full cycle and a sequential number immediately after the sequential number of the ID corresponding to the slat not recorded as having completed the full cycle.

12. An automated sortation system comprising:
a conveyor comprising a deck comprising at least one slat/shoe combination comprising a slat, a shoe disposed on the slat, and a radio frequency transceiver secured to one of the slat and the shoe;
an optical sensor identifying a package, disposed on the slat of the at least one slat/shoe combination, as the package traverses the head end of the conveyor;
a first read station, disposed at the head end of the conveyor, configured to establish communication with the radio frequency transceiver and thereby receive, as the slat traverses the head end of the conveyor, a radio frequency signal comprising a unique identification (ID) of the slat;
a second read station, disposed at an approach to a conveyor output, configured to establish communication with the radio frequency transceiver and thereby receive, as the slat approaches the conveyor output, the radio frequency signal comprising the ID of the slat;
a divert switch configured to divert the shoe of the at least one slat/shoe combination and thereby push the package, disposed on the slat of the at least one slat/shoe combination, to the conveyor output;
a controller comprising a memory and at least one processor configured to execute instructions stored in the memory and thereby control the divert switch to divert the shoe based on a signal from the optical sensor, a signal from the first read station, and a signal from the second read station.

13. The automated sortation system according to claim 12, further comprising:
a conveyor frame, wherein each cycle of the conveyor around the conveyor frame comprises a full cycle;
wherein:
the at least one slat/shoe combination comprises a plurality of slat/shoe combinations and the radio frequency transceiver of each of the plurality of slat/shoe combinations is secured to the shoe; and
the first read station is further configured to:
based on the receiving the radio frequency signal, determine that the shoe corresponding to the slat has completed a full cycle of the conveyor,
after a predetermined number of full cycles, record as missing any shoe corresponding to a slat not recorded as having completed a full cycle, and
transmit, to at least one external device, information regarding any shoe corresponding to the slat not recorded as having completed a full cycle.

14. The automated sortation system according to claim 13, wherein:
the first read station is further configured to identify a location of a missing shoe by receiving a radio frequency signal corresponding to one of a sequential number immediately before a sequential number of an ID corresponding to the missing shoe and a sequential number immediately after the sequential number of the ID corresponding to the missing shoe.
